# EUROPÄISCHE PATENTANMELDUNG

(11) **EP 3 852 211 A1**
(43) Veröffentlichungstag der Anmeldung: **21.07.2021**
(21) Anmeldenummer: 20152238.0
(22) Anmeldetag: 16.01.2020
(51) Int. Cl.: H02J 3/18, H02J 3/38

(54) **VERFAHREN ZUR REGELUNG DER LEISTUNGSABGABE EINES WINDPARKS**

(71) Anmelder: Nordex Energy SE & Co. KG, 22419 Hamburg (DE)
(72) Erfinder: Großeholz, Georg, 22767 Hamburg (DE); Jurkat, Mark, 22844 Norderstedt (DE)
(74) Vertreter: Hauck Patentanwaltspartnerschaft mbB

(57) **Zusammenfassung**

Die Erfindung betrifft ein Verfahren zur Regelung der Leistungsabgabe eines Windparks mit mehreren Windenergieanlagen, mit den Schritten: Festlegen eines Leistungsfaktorsollwerts, Umrechnen des Leistungsfaktorsollwerts in einen Blindleistungssollwert mittels einer aktuellen Wirkleistung, Regeln des Blindleistungssollwerts mittels einer aktuellen Blindleistung auf einen eingeregelten Blindleistungssollwert.

## Beschreibung

Die Erfindung betrifft Verfahren zur Regelung der Leistungsabgabe eines Windparks, ein Steuerungssystem zur Ausführung der Verfahren sowie einen Windpark mit einem solchen Steuerungssystem.

Im Stand der Technik sind verschiedene Verfahren zur Regelung der durch einen Windpark in ein Energieverteilungsnetz abgegebenen Leistung bekannt. Hierzu wird durch eine Steuereinheit eine leistungsbezogene elektrische Größe als Sollwert für den Windpark bzw. die einzelnen Windenergieanlagen des Windparks vorgegeben. Die Leistungsabgabe des Windparks kann somit eingestellt, insbesondere gedrosselt werden. Dies kann sinnvoll sein, wenn aufgrund bestimmter Umstände nicht die gesamte zur Verfügung stehende Leistung in das elektrische Netz eingespeist werden soll.

Als leistungsbezogene elektrische Größen sind für den Windpark bzw. eine Windenergieanlage die Scheinleistung (S), die Wirkleistung (P) und die Blindleistung (Q) von Relevanz, wobei die Summe der Quadrate der Wirkleistung und der Blindleistung gleich dem Quadrat der Scheinleistung ist, S² = P² + Q². Als geometrische Beziehung zwischen der Blindleistung und der Wirkleistung ist ein Phasenverschiebungswinkel ϕ = arctan (Q/P) definiert. Bei bekannten Verfahren zur Regelung der Leistungsabgabe eines Windparks wird als leistungsbezogene elektrische Größe zumeist der sogenannte Leistungsfaktor eingestellt und eingeregelt, wobei der Leistungsfaktor PF definiert ist als der Kosinus der Phasenverschiebung, PF = cos(ϕ). Ein solches Verfahren ist beispielsweise aus EP 1 746 285 A2 bekannt. Um sowohl die Wirk- als auch die Blindleistungsabgabe des Windparks regeln zu können, wird dem Windpark ein Sollwert für die abzugebende Wirkleistung und ein Sollwert für den Leistungsfaktor vorgeben.

Eine direkte Regelung des Leistungsfaktors ist jedoch relativ träge, insbesondere im Bereich um den Wert cos(ϕ) = 1. In diesem Bereich kann es zu einer Einregelzeit von ca. 5 Sekunden kommen, was die kurzfristige Regelbarkeit der Leistungsabgabe des Windparks einschränkt.

Der Erfindung liegt daher die Aufgabe zugrunde, die Leistungsabgabe eines Windparks bzw. einer Windenergieanlage mit einer möglichst kurzen Reaktionszeit zu regeln, insbesondere um schnell auf Änderungen im Netz reagieren zu können.

Die Erfindung löst die Aufgabe durch ein Verfahren gemäß Anspruch 1. Vorteilhafte Ausgestaltungen sind Gegenstand der Unteransprüche, der Beschreibung sowie der Figuren.

Ein erfindungsgemäßes Verfahren zur Regelung der Leistungsabgabe eines Windparks mit mehreren Windenergieanlagen sieht die Schritte vor:
- Festlegen eines Leistungsfaktorsollwerts PFₛₒₗₗ,
- Umrechnen des Leistungsfaktorsollwerts PFₛₒₗₗ in einen Blindleistungssollwert Qₛₒₗₗ mittels einer aktuellen Wirkleistung Pᵢₛₜ,
- Regeln des Blindleistungssollwerts Qₛₒₗₗ mittels einer aktuellen Blindleistung Qᵢₛₜ auf einen eingeregelten Blindleistungssollwert Q_{soll,reg}.

Nach diesem ersten erfindungsgemäßen Regelungsverfahren wird zunächst auch, wie bei dem eingangs erläuterten bekannten Verfahren, von einem Leistungsfaktorsollwert PFₛₒₗₗ ausgegangen. Dieser Leistungsfaktorsollwert PFₛₒₗₗ kann für alle Windenergieanlagen des Windparks derselbe sein. Im Gegensatz zu dem bekannten Regelverfahren wird jedoch nicht dieser Leistungsfaktorsollwert PFₛₒₗₗ unmittelbar an die an dem Verfahren teilnehmenden Windenergieanlagen vorgegeben. Stattdessen wird der Leistungsfaktorsollwert PFₛₒₗₗ zunächst anhand der aktuellen Wirkleistung Pᵢₛₜ, also der Leistung die der Windpark aktuell einspeist, umgerechnet in einen Blindleistungssollwert Qₛₒₗₗ. Diese Umrechnung erfolgt dabei insbesondere über die eingangs erläuterte Relation zwischen Blindleistung und Wirkleistung. So kann sich der Blindleistungssollwert ergeben als Qₛₒₗₗ = Pᵢₛₜ · tan (arccos PF). Anschließend wird erfindungsgemäß dieser Blindleistungssollwert Qₛₒₗₗ geregelt. Im Gegensatz zum Stand der Technik wird der Leistungsfaktor also nicht unmittelbar geregelt, sondern stattdessen die aus dem Leistungsfaktor ermittelte Blindleistung.

Wie eingangs erläutert, ist eine direkte Regelung des Leistungsfaktors relativ träge. Insbesondere im Bereich um den Wert cos(ϕ) = 1 kommt es zu unvorteilhaft langen Regelzeiten aufgrund von Nichtlinearitäten. Wenn der Leistungsfaktor gegen 1 geht, also cos(ϕ) → 1, nähert sich die Wirkleistung der Scheinleistung an, also P → S. Damit verschwindet die Blindleistung, also Q → 0. Wie die Erfinder festgestellt haben, lässt sich der Blindleistungssollwert vor allem im Bereich von 0 wesentlich schneller regeln als der Leistungsfaktor im Bereich von 1. Somit erlaubt das erfindungsgemäße Verfahren eine schnelle Steuerung bzw. Regelung der Leistungsabgabe und bietet somit die Möglichkeit auf Änderungen im Netz mit geringer Reaktionszeit reagieren zu können.

Entsprechend wird nach einer Ausgestaltung der eingeregelte Blindleistungssollwert Q_{soll,reg} an die Windenergieanlagen vorgegeben. Es kann somit der Blindleistungssollwert Q_{soll,reg} als leistungsbezogene elektrische Größe zur Steuerung der Leistungsabgabe des Windparks an die einzelnen Windenergieanlagen als Steuergröße vorgegeben werden. Insbesondere kann der Blindleistungssollwert anteilig an alle an dem Verfahren teilnehmenden Anlagen vorgegeben werden, wobei der anteilige Sollwert von der verfügbaren Blindleistung der jeweiligen Windenergieanlage abhängt.

Auch kann jedoch nach einer Ausgestaltung der eingeregelte Blindleistungssollwert Q_{soll,reg} anhand der aktuellen Wirkleistung Pᵢₛₜ zunächst in einen eingeregelten Leistungsfaktorsollwert PF_{soll,reg} umgerechnet und anschließend dieser eingeregelte Leistungsfaktorsollwert PF_{soll,reg} an die an dem Verfahren teilnehmenden Windenergieanlagen als Steuergröße vorgegeben werden. Nach dieser Ausgestaltung wird also nicht ein Blindleistungssollwert selbst vorgegeben sondern stattdessen ein aus diesem Blindleistungssollwert ermittelter Leistungsfaktorsollwert. In dieser Ausgestaltung wird insbesondere derselbe Leistungsfaktorsollwert an alle Windenergieanlagen übermittelt. Über das Regelverfahren eingeregelt wird dabei weiterhin die Blindleistung und nicht der Leistungsfaktor. Somit kann trotz der Vorgabe eines Leistungsfaktorsollwerts mit Vorteil die erfindungsgemäße schnelle Regelung erreicht werden. [HA1]

Nach einer diesbezüglichen Ausgestaltung wird der eingeregelte Leistungsfaktorsollwert PF_{soll,reg} für jede der am Verfahren teilnehmenden Windenergieanlagen mit jeweils einem Offset beaufschlagt und es werden anschließend die jeweiligen mit den Offsets beaufschlagten eingeregelten Leistungsfaktorsollwerte PF_{soll,stör, n} an die Windenergieanlagen als Steuergrößen vorgegeben. Auch können nach einer Ausgestaltung die eingeregelten Blindleistungssollwerte Q_{soll,reg} für jede der am Verfahren teilnehmenden Windenergieanlagen mit jeweils einem Offset beaufschlagt und anschließend diese jeweiligen mit Offsets beaufschlagten eingeregelten Blindleistungssollwerte Q_{soll,stör, n} an die Windenergieanlagen vorgegeben werden. Gemäß diesen Ausgestaltungen werden die jeweiligen Steuergrößen, also entweder der erläuterte eingeregelte Blindleistungssollwert oder der erläuterte eingeregelte Leistungsfaktorsollwert, vor der tatsächlichen Vorgabe als Steuergrößen an die Anlagen mit Offsets versehen. Das Beaufschlagen mit Offsets bedeutet dabei, dass die jeweiligen Steuergrößen künstlich in einem gewissen Maße variiert werden. Insbesondere können die Steuergrößen etwas erhöht oder verringert werden. Wurde mittels der erläuterten Verfahrensschritte eine Steuergröße für die Windenergieanlagen ermittelt, werden durch das Aufschlagen des Offsets nun einzelne Steuergrößen für jede der einzelnen Anlagen erzeugt. Wie die Erfinder festgestellt haben, tragen auch um solche Offsets veränderte Steuergrößen für die einzelnen am Verfahren teilnehmenden Windenergieanlagen zu einer Verringerung der Einregelzeit bei. Zudem kann mit so einem Offset die Steuergröße über den gesamten Windpark besser eingehalten werden, insbesondere bei einer Steuerung mit geringer Auflösung. Häufig verfügen die Anlagensteuerungen der Windenergieanlagen, insbesondere die Umrichterschnittstellen, über eine Auflösung von nur 16 Bit. Wird nun die erfindungsgemäß ermittelte Steuergröße den Anlagensteuerungen übermittelt, erfolgt eine Diskretisierung auf beispielsweise auf INT16. Ergibt sich nun eine Steuergröße nahe cos(cp) = 1, so führt aufgrund der Diskretisierung eine kleine Änderung der Steuergröße zu großen tatsächlichen Leistungsabgaben durch die Anlagen. Wird diese Steuergröße an alle Windenergieanlagen im Windpark verteilt, so ergibt sich eine entsprechend skalierte große Blindleistungs- bzw. Leistungsfaktoränderung. Dies kann bei ungünstigen Konstellationen, z.B. bei wenig Wirkleistung, zu Schwingungen führen. Um diese zu minimieren wird daher die Steuergröße nach der erläuterten Ausgestaltung für die einzelnen Windenergieanlagen durch einen Offset so verstellt, dass es im Mittel bei der vorgegebenen Steuergröße bleibt.

Die Offsets können dabei grundsätzlich zufällig verteilt sein. Nach einer besonders bevorzugten Ausgestaltung erfolgt die Beaufschlagung mit den Offsets nach einer vorbestimmten, insbesondere zufälligen, Verteilung so, dass der Mittelwert über alle Offsets null ergibt. Über alle Anlagen ergibt sich damit im Mittel keine Abweichung. Die Offsets tragen damit zur Regelung bei ohne die zu erreichende Leistungsabgabe negativ zu beeinflussen. Alternativ oder zusätzlich sind die Offsets nach einer Ausgestaltung abhängig von Betriebsbedingungen der einzelnen Windenergieanlagen, insbesondere von die Blindleistung beeinflussenden Betriebsbedingungen. Derartige Betriebsbedingungen können beispielsweise die Temperatur des Umrichters oder des Generators sein.

Nach einer Ausgestaltung wird zum Regeln des Blindleistungssollwerts Qₛₒₗₗ auf den eingeregelten Blindleistungssollwert Q_{soll,reg} eine Abweichung zwischen dem Blindleistungssollwert Qₛₒₗₗ und der aktuellen Blindleistung Q ermittelt wird und der eingeregelte Blindleistungssollwert Q_{soll,reg} derart festgelegt wird, dass die Abweichung verschwindet. Durch diese Regelungsmethode kann somit der eingeregelte Blindleistungssollwert Q_{soll,reg} erzeugt werden. Entsprechende Verfahren sind im Stand der Technik bekannt und werden hier nicht weiter erläutert.
[HA2]
Die erläuterten Schritte der erfindungsgemäßen Steuerverfahren können teilweise oder vollständig durch eine zentrale Steuerung des Windparks durchgeführt werden. Diese zentrale Steuerung kann die ermittelten Steuergrößen anschließend an die einzelnen am Verfahren teilnehmenden Windenergieanlagen übermitteln, insbesondere an die jeweiligen Anlagensteuerungen. Auch können jedoch die Anlagensteuerungen der einzelnen Windenergieanlagen dazu ausgebildet sein, die erläuterten Schritte des erfindungsgemäßen Steuerverfahrens jeweils selbst teilweise oder vollständig auszuführen. Es kann somit eine dezentrale Steuerung realisiert sein. Auch können einige Schritte durch die zentrale Steuerung und einige Schritte durch die Anlagensteuerungen lokal an den Anlagen durchgeführt werden. Insbesondere können die Anlagensteuerungen der einzelnen Windenergieanlagen eingerichtet sein, einen Wert für die verfügbare Blindleistung der jeweiligen Anlage zu ermitteln und an die zentrale Steuerung des Windparks zu übermitteln. Die verfügbare Blindleistung kann abhängig sein vom Betriebspunkt der Windenergieanlage und wird insbesondere begrenzt durch den Scheinstrom, den die Anlage in diesem Betriebspunkt bereitstellen kann. Entsprechende Verfahren zum Ermitteln der verfügbaren Blindleistung sind im Stand der Technik bekannt und werden hier nicht weiter erläutert.

Eine Ausgestaltung der Erfindung wird im Folgenden anhand von Figuren erläutert. Es zeigen schematisch:
- Figur 1: eine Windenergieanlage in seitlicher Ansicht,
- Figur 2: eine schematisches Diagramm der Windenergieanlage aus Fig. 1, und
- Figuren 3a-3c: Ablaufschemata der erfindungsgemäßen Regelungsverfahren.

Soweit nichts anderes angegeben ist, bezeichnen im Folgenden gleiche Bezugszeichen gleiche Gegenstände.

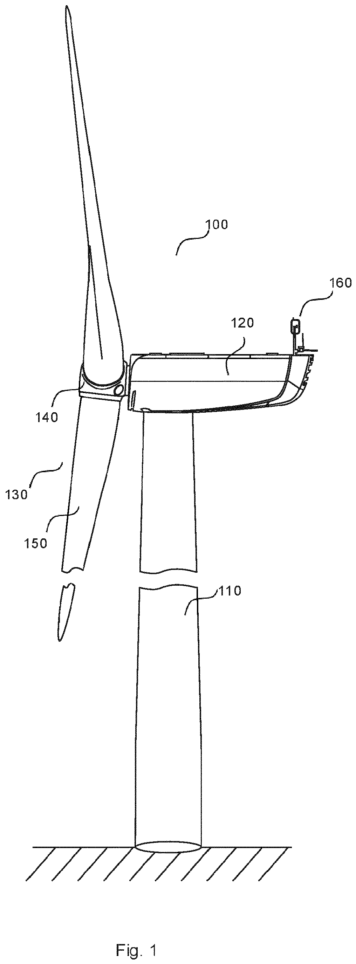

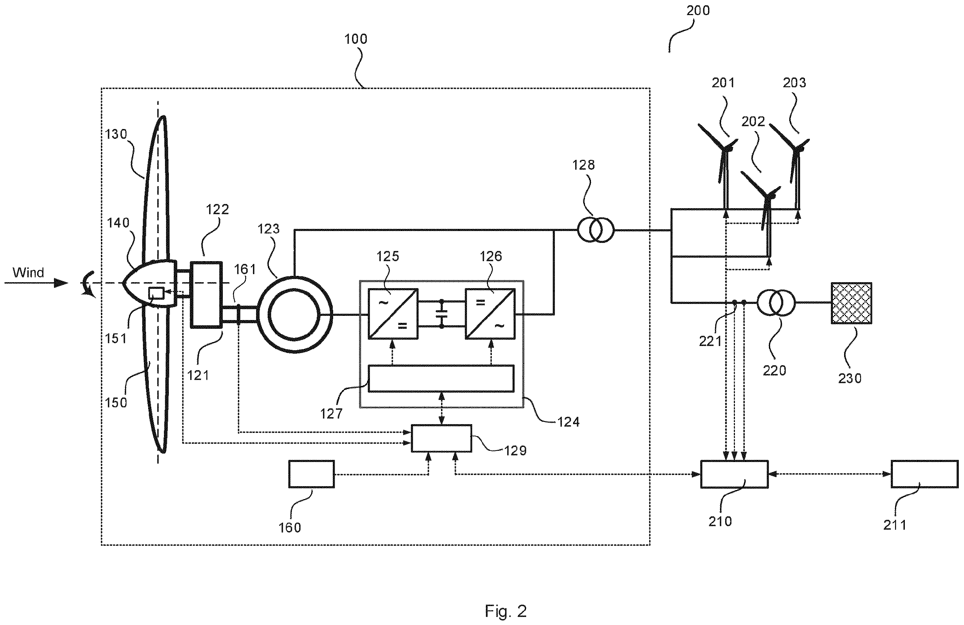

In Fig. 1 ist eine Windenergieanlage 100 ersichtlich, umfassend einen Turm 110, eine drehbar am oberen Ende des Turmes 110 angeordnete Gondel 120, einen drehbar an der Gondel 120 angeordneten Rotor 130 mit einer Rotornabe 140 und sich von der Rotornabe 140 fort erstreckenden Rotorblättern 150. Die Gondel 120 weist ein Sensorarray 160 auf, das mit Sensoren zur Messung der Windgeschwindigkeit und der Windrichtung versehen ist. Die Windenergieanlage 100 ist geeignet für das erfindungsgemäße Verfahren und bildet insbesondere Teil eines Windparks 200, wie in Fig. 2 dargestellt.

Fig. 2 zeigt insgesamt einen Windpark 200, wobei der elektrische Aufbau der Windenergieanlage 100 besonders herausgestellt ist. Zudem sind weitere Windenergieanlagen 201, 202, 203 ersichtlich, welche allesamt Teil des Windparks 200 sind. Die Windenergieanlagen des Windparks 200 sind über eine Übergabestation 220 mit einem dreiphasigen elektrischen Übertragungsnetz 230 verbunden und können in dieses Leistung einspeisen. Die Windenergieanlagen sind jeweils über einen Mittelspannungstransformator 128, der in Fig. 2 exemplarisch für die Windenergieanlage 100 dargestellt ist, mit der Übergabestation 220 und dem elektrischen Übertragungsnetz 230 verbunden.

Der Rotor 130 der Windenergieanlage 100 nimmt ein Drehmoment aus dem Wind auf und leitet dieses über einen Antriebsstrang 121, der ein Getriebe 122 umfasst, an den Rotor eines doppeltgespeisten Asynchrongenerators 123 weiter, welcher eingerichtet ist, die aus dem Wind aufgenommene kinetische Energie in elektrische Energie umzuwandeln und in das elektrische Übertragungsnetz 230 einzuspeisen. Der Stator des Generators 123 ist über eine dreiphasige Leitung mit dem elektrischen Versorgungsnetz 230 verbunden. Der Rotor des Generators 123 ist über eine dreiphasige Leitung mit einem Wechselstrom-Umrichter 124 verbunden. Der Wechselstrom-Umrichter 124 ist netzseitig über eine dreiphasige Leitung mit dem Stator des Generators 123 und dem elektrischen Versorgungsnetz 230 verbunden. Zur besseren Übersicht werden elektrische Leitungen in der Fig. 2 schematisch einphasig dargestellt.

Der Wechselstrom-Umrichter 124 weist einen rotorseitigen Umrichter 125 und einen netzseitigen Umrichter 126 auf. Zwischen den Umrichtern ist ein Gleichstromzwischenkreis vorgesehen. Ein Umrichterregler 127 des Wechselstrom-Umrichters 124 ist dazu eingerichtet, über eine Regelung der Rotorströme in dem Rotor des Generators 123 ein Generatormoment und damit die über den Statorkreis eingespeiste Leistung einzustellen. Der Umrichterregler 127 des Wechselstrom-Umrichters 124 ist weiterhin dazu eingerichtet, die über den netzseitigen Umrichter 126 eingespeiste Leistung einzustellen. Hierzu kann der Umrichterregler 127 dem rotorseitigen und/oder dem netzseitigen Umrichter 125, 126 Stellgrößen, für Ströme, Spannungen, Leistungen und/oder das Generatormoment vorgeben. Für die Ströme und Leistungen können Blind- und/oder Wirkgrößen vorgegeben werden. Entsprechende Regelungsverfahren sind allgemein für doppelt-gespeiste Asynchronmaschinen bekannt. Der rotorseitige Umrichter 125 stellt die Rotorströme und damit das Generatormoment durch die Schaltung von leistungselektronischen Bauelementen ein. Zur Regelung des Generatormoments kommuniziert der Umrichterregler 127 mit einem Windenergieanlagenregler 129 und erhält von diesem insbesondere einen Sollwert für ein Generatormoment oder eine abzugebende Wirkleistung. Der Umrichterregler 127 stellt Messwerte für rotor- und netzseitig vorliegende Ströme und weitere Messgrößen an den Windenergieanlagenregler 129, die durch diesen für die Bestimmung einer verfügbaren Blindleistung, also der durch die Windenergieanlage bereitstellbaren Blindleistung, verwendet werden können.

Die Windenergieanlage 100 weist einen Drehzahlsensor 161 auf. Dieser kann an einer Stelle an dem Antriebsstrang 121 vorgesehen sein, der eine Messung der Drehzahl des Antriebstrangs zulässt, beispielsweise an einer Getriebeausgangswelle, die mit dem Rotor des Generators 123 verbunden ist. Von dem Drehzahlsensor 161 gemessene Drehzahlwerte liegen als Eingangsgröße an dem Windenergieanlagenregler 129 an. Weiterhin liegen an dem Windenergieanlagenregler 129 Größen an, die mittels der Sensoren des Sensorarrays 160 erfasst werden. Beispielsweise liegen die Windgeschwindigkeit und die Windrichtung als Eingangsgrößen an dem Windenergieanlagenregler 129 an. Auch weitere Messgrößen, wie beispielsweise die Netzfrequenz oder die Netzspannung liegen als Eingangsgrößen an dem Windenergieanlagenregler 129 und werden durch diesen bei der Regelung der Anlage berücksichtigt. Ebenso können diese Größen bei der Ermittlung der verfügbaren Blindleistung berücksichtigt werden. Die Gondel 120 der Windenergieanlage und damit ihr Rotor 130 kann über eine Azimutverfahreinrichtung (nicht gezeigt) gegenüber der Windrichtung ausgerichtet werden.

Der Windenergieanlagenregler 129 ist weiterhin mit einer Rotorblattwinkelstellvorrichtung 151 verbunden, mittels derer der Windenergieanlagenregler 129 die Pitchwinkel der Rotorblätter 150 steuert. Der Windenergieanlagenregler 129 dient generell dazu, die Windenergieanlage 100 in ihrem Betrieb zu regeln. Der Windenergieanlagenregler 129 kann beispielsweise als speicherprogrammierbare Steuerung (SPS) ausgebildet sein und eine Software zur Regelung der Windenergieanlage aufweisen. Beispielsweise empfängt der Windenergieanlagenregler 129 Signale und Steuerbefehle von einem Windparkregler 210, mit welchem er über eine Datenleitung kommuniziert. Der Windparkregler 210 erhält von dem Windenergieanlagenregler 129 Signale, die als Eingangsgrößen für die Regelung des Windparks dienen, beispielsweise Informationen über die aktuell eingespeiste Wirk- und Blindleistung sowie Informationen über die verfügbare Wirk- und Blindleistung.

In dem vorliegenden Ausführungsbeispiel ist der Windparkregler 210 als übergeordnete Steuereinheit dazu eingerichtet, zumindest eines der erfindungsgemäßen Verfahren zumindest teilweise auszuführen. Der Windparkregler 210 sendet Signale für die Regelung des Windparks 200 an die einzelnen Windenergieanlagen 100, 201, 202, 203 bzw. deren Windenergieanlagenregler. Der Windparkregler 210 kann beispielsweise als speicherprogrammierbare Steuerung (SPS) ausgebildet sein und eine Software zur Regelung des Windparks aufweisen. Der Windparkregler 210 ist über eine Datenleitung mit einer externen Regelungseinrichtung 211, beispielsweise einer Netzleitstelle, verbunden und erhält von dieser Sollwertvorgaben für die von dem Windpark einzuspeisende Leistung bzw. den für diese Leistung einzustellenden Leistungsfaktor. Der Windparkregler 210 ist eingerichtet, die Leistungsabgabe des Windparks in Abhängigkeit von Sollwertvorgaben der von der externen Regelungseinrichtung 211 einzustellen. Diese Sollwertvorgaben können beispielsweise auf Basis einer von dem Windparkregler 210 an die externe Regelungseinrichtung 211 gemeldeten verfügbaren Leistung (Wirkleistung, Blindleistung, Scheinleistung) des Windparks und dem Leistungsbedarf des Energieversorgungsnetzes vorgegeben sein. Alternativ oder ergänzend dazu kann die Leistungssollwertvorgabe für den Windpark durch den Windparkregler 210 auf Basis von Messwerten erfolgen, die mittels einer Sensoreinheit 221 am oder in der Nähe des Netzverknüpfungspunktes des Windparks erfasst werden und die als Eingangsgrößen an dem Windparkregler 210 anliegen. Die Sollwertvorgabe kann basierend auf einer gemessenen Netzfrequenz, der Netzspannung und/oder der eingespeisten Blindleistung vorgegeben werden. Zur Regelung der von dem Windpark eingespeisten Leistung ist in dem Windparkregler 210 eine entsprechende Regelungsvorschrift hinterlegt. Entsprechende Verfahren sind aus dem Stand der Technik bekannt. Zur Ausführung der erfindungsgemäßen Verfahren liegen insbesondere Messwerte für die aktuell von dem Windpark abgegebene Wirkleistung Pᵢₛₜ und Blindleistung Qᵢₛₜ an dem Windparkregler 210 an. Dem Windparkregler 210 kann insbesondere ein Sollwert für den Leistungsfaktor PFₛₒₗₗ der einzuspeisenden Leistung vorgegeben sein.

Unter gemessenen Werten oder Eingangswerten werden im Rahmen dieser Beschreibung nicht nur eigentliche Messwerte verstanden, sondern insbesondere auch solche Größen, die aus den gemessenen Werten oder Verknüpfungen von unterschiedlichen Werten berechnet wurden. Dabei können auch Größen als zeitliche Mittelwerte über einen geeigneten Zeitraum bestimmt werden.

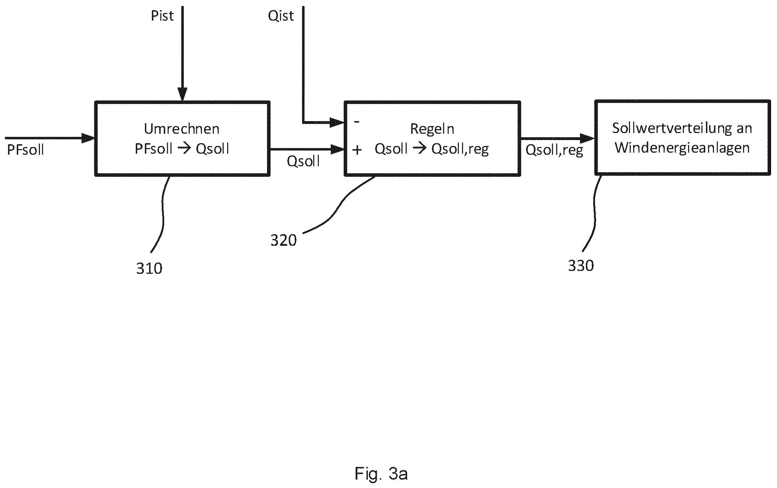

In Fig. 3a ist ein Ablaufschema ersichtlich, welches den Ablauf eines der erfindungsgemäßen Verfahren darstellt. Bei Bezugszeichen 310 wird ein festgelegter Leistungsfaktorsollwert PFₛₒₗₗ umgerechnet in einen Blindleistungssollwert Qₛₒₗₗ. Hierfür geht eine aktuelle Wirkleistung Pᵢₛₜ ein, wie durch einen Pfeil dargestellt. Der Blindleistungssollwert kann errechnet werden als Qₛₒₗₗ = Pᵢₛₜ · tan (arccos PFₛₒₗₗ). Anschließend wird der berechnete Blindleistungssollwert Qₛₒₗₗ bei Bezugszeichen 320 mittels einer aktuellen Blindleistung Qᵢₛₜ auf einen eingeregelten Blindleistungssollwert Q_{soll,reg} geregelt. Dieser eingeregelte Blindleistungssollwert Q_{soll,reg} wird anschließend als Steuergröße auf alle an dem Verfahren teilnehmenden Windenergieanlagen aufgeteilt, wie bei Bezugszeichen 330 ersichtlich. Die einzelnen n Windenergieanlagen erhalten einen anteiligen Blindleistungssollwert Q_{soll,reg, n} vorgegeben, wobei Q_{soll,reg =} ∑Q_{soll,reg, n} gilt. Die anteiligen Blindleistungssollwerte Q_{soll,reg, n} für die n an dem Verfahren teilnehmenden Anlagen können in Abhängigkeit der verfügbaren Blindleistung der einzelnen Windenergieanlagen Q_{ver,n} ermittelt werden, beispielsweise mittels der Gleichung Q_{sol,lreg, n} = Q_{ver,n} · Q_{soll,reg} / ∑Q_{ver,n}. Die Summation erfolgt jeweils über n. Auch andere Verteilungsverfahren sind mit dem erfindungsgemäßen Verfahren kombinierbar. Damit kann das Verfahren, welches durch den Windparkregler 210 ausgeführt wird, nach dieser Ausgestaltung bereits enden.

Wie eingangs erläutert, ist eine direkte Regelung des Leistungsfaktors relativ träge. Insbesondere im Bereich um den Wert cos(ϕ) = 1 kommt es zu unvorteilhaft langen Regelzeiten aufgrund von Nichtlinearitäten. Wenn der Leistungsfaktor gegen 1 geht, also cos(ϕ) → 1, nähert sich die Wirkleistung der Scheinleistung an, also P → S. Damit verschwindet die Blindleistung, also Q → 0. Der Blindleistungssollwert lässt sich vor allem im Bereich von 0 jedoch wesentlich schneller regeln als der Leistungsfaktor im Bereich von 1, wie die Erfinder festgestellt haben. Mit den erläuterten Verfahrensschritten kann somit bereits eine schnelle Steuerung der Leistungsabgabe erreicht werden.

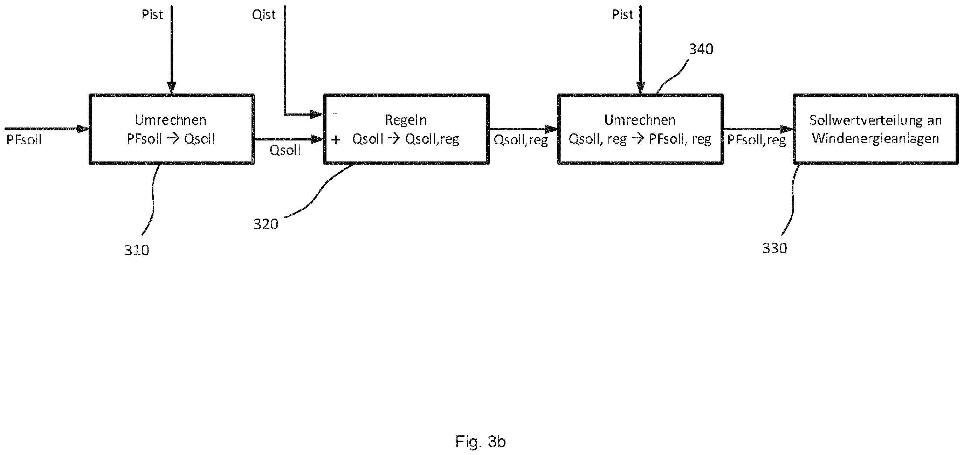

In Fig. 3b ist ein Ablaufschema ersichtlich, welches den Ablauf eines weiteren erfindungsgemäßen Verfahrens darstellt. Nach dieser Ausgestaltung wird der eingeregelte Blindleistungssollwert Q_{soll,reg} - anstatt direkt für die Windenergieanlagen als Steuergröße verwendet zu werden - zunächst im Schritt 340 in einen eingeregelten Leistungsfaktorsollwert PF_{soll,reg} umgerechnet . Diese Umrechnung erfolgt wiederum anhand der aktuellen Wirkleistung Pᵢₛₜ. Dafür kann die Beziehung PFₛₒₗₗ = cos (arctan Qₛₒₗₗ / Pᵢₛₜ) verwendet werden. Anschließend kann nach einer weiteren Ausgestaltung dieser eingeregelte Leistungsfaktorsollwert PF_{soll,reg} gemäß Schritt 330 an die Windenergieanlagen als Steuergröße vorgegeben werden. Gemäß dieser Ausgestaltung kann der ermittelte eingeregelte Leistungsfaktorsollwert PF_{soll,reg} allen an dem Verfahren teilnehmenden Windenergieanlagen als Sollwert vorgegeben werden. Die von den Anlagen abgegebene Blindleistung wird durch die Anlagen dann abhängig von dem vorgegebenen Leistungsfaktor und einem vorgegebenen Sollwert für die abzugebende Wirkleistung eingespeist.

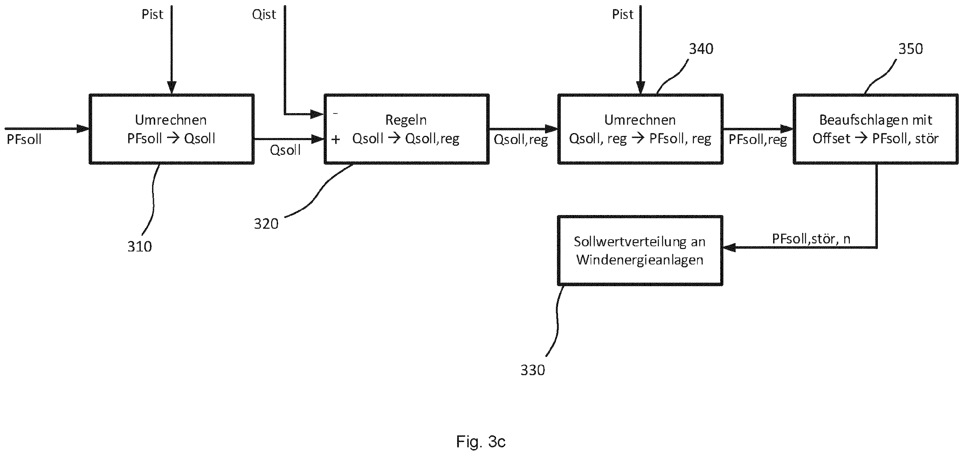

In Fig. 3c ist ein Ablaufschema ersichtlich, welches den Ablauf eines weiteren erfindungsgemäßen Verfahrens darstellt. Nach dieser Ausgestaltungwird der eingeregelten Leistungsfaktorsollwert PF_{soll,reg} - anstatt direkt an die Windenergieanlagen als Steuergröße vorgegeben zu werden - in Schritt 350 zunächst für jede der an dem Verfahren teilnehmenden Windenergieanlagen mit Offsets beaufschlagt. Es entstehen somit mehrere Leistungsfaktorsollwerte PF_{soll,stör, n}, die dann als Vorgabewerte/Steuergrößen den einzelnen n an dem Verfahren teilnehmenden Windenergieanlagen gemäß Schritt 330 vorgegeben werden. Insbesondere können zumindest einige der Anlagen somit unterschiedliche Leistungsfaktorsollwerte PF_{soll,stör, n} erhalten. Die Offsets werden zufällig so vorgegeben, dass diese in Summe 0 ergeben. Weiterhin werden die Offsets so vorgegeben, dass diese jeweils einen bestimmten Wert nicht überschreiten. Der Wert kann sich beispielsweise an der Höhe des Leistungsfaktors orientieren, so dass die Verteilung nur Werte enthält die klein gegenüber dem Leistungsfaktor sind und beispielsweise max. 20% des Leistungsfaktors betragen.

Dies trägt ebenfalls zur Verringerung der Regelzeit bei, insbesondere um cos(cp) = 1. Zudem kann mit so einem Offset der Leistungsfaktorsollwert über den gesamten Windpark besser eingehalten werden, da aufgrund der steuerungsbedingten Diskretisierung auftretende Regelschwingungen minimiert werden, wie oben erläutert. Im Mittel sind die verteilten Offsets dabei bevorzugt null, sodass die tatsächliche Leistungsabgabe des Windparks nicht von der Vorgabe abweicht.

### Bezugszeichenliste

- 100: Windenergieanlage
- 110: Turm
- 120: Gondel
- 130: Rotor
- 140: Rotornabe
- 150: Rotorblatt
- 160: Sensorarray
- 200: Windpark
- 201, 202, 203: Windenergieanlage
- 210: zentraler Windparkregler
- 211: externe Regelungseinrichtung (Netzbetreiber)
- 220: Übergabestation
- 221: Sensoreinheit
- 230: elektrisches Übertragungsnetz
- 121: Antriebstrang
- 122: Getriebe
- 123: Generator
- 124: Umrichter
- 125: rotorseitiger Umrichter
- 126: netzseitiger Umrichter
- 127: Umrichterregler
- 128: Mittelspannungstransformator
- 129: Windenergieanlagenregler
- 151: Rotorblattwinkelstellvorrichtung
- 161: Drehzahlsensor
- PFₛₒₗₗ: Leistungsfaktorsollwert
- Pᵢₛₜ: Wirkleistungsistwert
- Qᵢₛₜ: Blindleistungsistwert
- Qₛₒₗₗ: Blindleistungssollwert
- Q_{soll,reg}: geregelter Blindleistungssollwert
- PF_{soll,reg}: geregelter Leistungsfaktorsollwert
- PF_{soll,stör, n}: geregelter, mit Störgröße beaufschlagter Leistungsfaktorsollwert für die Windenergieanlage n
- 310 - 350: Verfahrensschritte

## Patentansprüche

1. Verfahren zur Regelung der Leistungsabgabe eines Windparks (200) mit mehreren Windenergieanlagen (100, 201, 202, 203), umfassend die Schritte:
- Festlegen eines Leistungsfaktorsollwerts (PFₛₒₗₗ),
- Umrechnen des Leistungsfaktorsollwerts (PFₛₒₗₗ) in einen Blindleistungssollwert (Qₛₒₗₗ) mittels einer aktuellen Wirkleistung (Pᵢₛₜ),
- Regeln des Blindleistungssollwerts (Qₛₒₗₗ) mittels einer aktuellen Blindleistung (Qᵢₛₜ) auf einen eingeregelten Blindleistungssollwert (Q_{soll,reg}).

2. Verfahren nach Anspruch 1, **gekennzeichnet durch** Vorgabe des eingeregelten Blindleistungssollwerts (Q_{soll,reg}) an die Windenergieanlagen (100, 201, 202, 203).

3. Verfahren nach Anspruch 2, **dadurch gekennzeichnet, dass** die Vorgabe des eingeregelten Blindleistungssollwerts (Q_{soll,reg}) an die Windenergieanlagen (100, 201, 202, 203) anteilig erfolgt.

4. Verfahren nach Anspruch 3, **dadurch gekennzeichnet, dass** der anteilige Blindleistungssollwert von der verfügbaren Blindleistung der jeweiligen Windenergieanlage (100, 201, 202, 203) abhängt.

5. Verfahren nach Anspruch 1, **gekennzeichnet durch**
- Umrechnen des eingeregelten Blindleistungssollwerts (Q_{soll,reg}) in einen eingeregelten Leistungsfaktorsollwert (PF_{soll,reg}) mittels der aktuellen Wirkleistung (Pᵢₛₜ),
- Vorgabe des eingeregelten Leistungsfaktorsollwerts (PF_{soll,reg}) an die Windenergieanlagen (100, 201, 202, 203).

6. Verfahren nach Anspruch 5, **gekennzeichnet durch** Vorgabe desselben eingeregelten Leistungsfaktorsollwerts (PF_{soll,reg}) an alle Windenergieanlagen (100, 201, 202, 203) des Windparks.

7. Verfahren nach Anspruch 5 oder 6, **gekennzeichnet durch** ein Beaufschlagen des eingeregelten Leistungsfaktorsollwerts (PF_{soll,reg}) für jede der am Verfahren teilnehmenden Windenergieanlagen mit jeweils einem Offset, und anschließende Vorgabe der jeweiligen mit den Offsets beaufschlagten, eingeregelten Leistungsfaktorsollwerte (PF_{soll,stör, n}) an die Windenergieanlagen (100, 201, 202, 203).

8. Verfahren nach Anspruch 7, **dadurch gekennzeichnet, dass** die Beaufschlagung mit Offsets nach einer vorbestimmten Verteilung erfolgt, wobei der Mittelwert über alle Offsets null ergibt.

9. Verfahren nach Anspruch 7 oder 8, **dadurch gekennzeichnet, dass** die Offsets abhängig von Betriebsbedingungen der einzelnen Windenergieanlagen (100, 201, 202, 203) sind.

10. Verfahren nach einem der vorhergehenden Ansprüche, **dadurch gekennzeichnet, dass** zum Regeln des Blindleistungssollwerts (Qₛₒₗₗ) auf den eingeregelten Blindleistungssollwert (Q_{soll,reg}) eine Abweichung zwischen dem Blindleistungssollwert (Qₛₒₗₗ) und der aktuellen Blindleistung (Qᵢₛₜ) ermittelt wird und der eingeregelte Blindleistungssollwert (Q_{soll,reg}) derart festgelegt wird, dass die Abweichung verschwindet.

11. Steuerungssystem zur Regelung der Leistungsabgabe eines Windparks (200) mit mehreren Windenergieanlagen (100, 201, 202, 203), wobei das Steuerungssystem zur Ausführung wenigstens eines der Verfahren nach den Ansprüchen 1 bis 10 ausgebildet ist.

12. Windpark (200) mit mehreren Windenergieanlagen (100, 201, 202, 203) umfassend ein Steuerungssystem nach Anspruch 11.
